# EUROPÄISCHE PATENTSCHRIFT

(11) **EP 1 910 649 B1**
(45) Veröffentlichungstag und Bekanntmachung des Hinweises auf die Patenterteilung: **05.10.2011**
(21) Anmeldenummer: 06761822.3
(22) Anmeldetag: 19.07.2006
(51) Int. Cl.: F01D 11/24

(54) **VORRICHTUNG ZUR AKTIVEN SPALTKONTROLLE FÜR EINE STRÖMUNGSMASCHINE**
APPARATUS FOR ACTIVE GAP MONITORING FOR A CONTINUOUS FLOW MACHINE
DISPOSITIF DE CONTROLE ACTIF DES JEUX POUR UNE TURBOMACHINE

(30) Priorität: 29.07.2005 DE 102005035540
(43) Veröffentlichungstag der Anmeldung: 16.04.2008
(73) Patentinhaber: MTU Aero Engines GmbH, 80995 München (DE)
(72) Erfinder: MORGENSTERN, Stefan, 81677 München (DE); STANKA, Rudolf, 84431 Rattenkirchen (DE)
(86) Internationale Anmeldenummer: PCT/DE2006/001245
(87) Internationale Veröffentlichungsnummer: WO 2007/012305

(56) Entgegenhaltungen:
- EP-A1- 0 541 325
- GB-A- 2 217 788
- US-A- 5 399 066
- US-A- 5 980 201

## Beschreibung

Die Erfindung betrifft eine Vorrichtung zur aktiven Spaltkontrolle für eine Strömungsmaschine, insbesondere einen Flugantrieb, welche einen Rotor und ein den Rotor unter Ausbildung eines Rotorspaltes umgebendes Gehäuse aufweist, wobei die Vorrichtung einen am Außenumfang des Rotorgehäuses angeordneten Kühlkanal aufweist, der von einem Plenum mit Kühlluft versorgt wird.

Bei Strömungsmaschinen, hierunter fallen beispielsweise Turbinen, Pumpen; Verdichter oder Gebläse, stellt der Rotorspalt zwischen stationärem Rotorgehäuse und rotierendem Rotor eine Quelle von Strömungsverlusten und damit eine Ursache für einen verringerten Wirkungsgrad dar. Die Strömungsverluste entstehen zum einen durch Wirbelbildung und Strömungsablösung im oder am Rotorspalt, was auch zu einem erhöhten Strömungslärm führt, zum anderen durch eine Ausgleichsströmung, die entgegen der Hauptströmungsrichtung durch den Rotor gerichtet ist und die erreichbare Druckdifferenz zwischen der Hochdruckseite und der Niederdruckseite der Strömungsmaschine beschränkt.

Bei einer idealen verlustfreien Strömungsmaschine wäre ein Rotorspalt nicht vorhanden. In der Praxis ist dies jedoch nicht möglich, da in diesem Fall die Spitzen der Rotorblätter das Gehäuse berühren und bei der Drehung des Rotors am Gehäuse schleifen und damit verschleissen würden. Besonders ausgeprägt ist dieses Problem bei Strömungsmaschinen, bei denen die Rotoren mit hoher Drehzahl umlaufen und/oder mit hohen Temperaturen beaufschlagt sind, wie beispielsweise bei Flugzeugtriebwerken und Gasturbinen sowie bei Abgasturboladern. Bei derartigen Strömungsmaschinen längt sich das Rotorblatt abhängig von der Temperatur und von der Drehzahl. Zusätzlich weitet sich das Gehäuse in Abhängigkeit von der Betriebstemperatur. Durch den Rotorspalt werden die Ausdehnung des Gehäuses und die Längung der Rotorblätter kompensiert, ohne dass es zu einer Beschädigung der Strömungsmaschine kommen kann.

Die Weite des Rotorspalts und damit die Verluste der Strömungsmaschine ändern sich folglich in Abhängigkeit von der Drehzahl und der Temperatur im gerade durchlaufenen Betriebszustand.

In der Praxis wird der Rotorspalt in der Regel so eingestellt, dass in einem Dauerbetriebspunkt, bei dem die Strömungsmaschine in der Regel betrieben wird, ein möglichst kleiner Rotorspalt vorliegt. Bei Flugzeugtriebwerken oder bei Abgasturboladern liegt dieser Dauerbetriebspunkt beispielsweise bei der Reisegeschwindigkeit. Gleichzeitig werden bei der Bemessung des Rohrspalts in der Praxis Grenzlastbereiche und Anlaufbereiche der Strömungsmaschine berücksichtigt: Der Rotorspalt soll so bemessen sein, dass auch unter Extrembedingungen bei hinnehmbaren Strömungsverlusten Beschädigungen von Rotorblatt und Gehäuse vermieden werden.

In der Praxis wird also zugunsten eines möglichst guten Wirkungsgrades ein gewisser Verschleiss von Gehäuse und Rotorblatt durch das Anlaufen der Strömungsmaschine oder den Betrieb der Strömungsmaschine im Grenzlastenbereich in Kauf genommen.

Um in allen Betriebsbereichen der Strömungsmaschine einen optimalen Rotorspalt, also eine Rotorspaltweite, bei der Verschleiss und Strömungsverluste minimal sind, zu erzielen, sind im Stand der Technik einige Lösungen vorgeschlagen.

So sind in den Patentschriften US 6,149,074, US 5,100,291, US 5,399,066 und der Patentanmeldung US 2002/0136631 A1 Vorrichtungen zur aktiven Spaltkontrolle (Active Clearance Control ACC) bei Gasturbinen beschrieben, die aus am Gehäuseumfang angeordneten Kühlkanälen bestehen. Hierdurch werden Teile des Gehäuses gegenüber dem Rotor selektiv gekühlt, um über die so kontrollierte Wärmedehnung des Gehäuses den Rotorspalt einzustellen.

Nachteilig bei diesem bekannten Stand der Technik ist, dass diese Kühlkanäle mit konstantem Querschnitt ausgelegt sind. Dies führt zu erhöhtem Gewicht und inhomogener Kühlung.

Der Erfindung liegt daher die Aufgabe zugrunde, die eingangs genannten Vorrichtungen zur aktiven Spaltkontrolle zu verbessern. Insbesondere soll das Gewicht derartiger Vorrichtungen verringert und eine homogene Kühlung gewährleistet werden.

Diese Aufgabe wird erfindungsgemäß durch eine Vorrichtung mit den Merkmalen des Patentanspruchs 1 gelöst. Vorteilhafte Weiterbildungen der Erfindung sind in den abhängigen Ansprüchen angegeben.

Die erfindungsgemäße Vorrichtung zur aktiven Spaltkontrolle für eine Strömungsmaschine, insbesondere einen Flugantrieb, welche einen Rotor und ein den Rotor unter Ausbildung eines Rotorspaltes umgebendes Gehäuse aufweist, wobei die Vorrichtung einen am Außenumfang des Rotorgehäuses angeordneten, sich in einem Abstand von der Außenseite des Gehäuses in Umfangsrichtung erstreckenden Kühlkanal aufweist, der von einem Plenum mit Kühlluft versorgt wird und mehrere Austrittsöffnungen für das Ausblasen der kühlluft auf die Außenseite des Gehäuses besitzt, ist dadurch ausgezeichnet, dass der Querschnitt des Kühlkanals vom Plenum her in Umfangsrichtung abnimmt. Dabei kann der Querschnitt so eingestellt werden, dass die Strömungsgeschwindigkeit entlang des Umfangs gleich bleibt und somit der Öffnungsabstand konstant gehalten werden kann.

Hierdurch wird eine homogene Kühlung gewährleistet und das Gewicht der Vorrichtung verringert.

Eine vorteilhafte Ausführungsform der Erfindung sieht vor, dass der Kühlkanal einen rechteckigen Querschnitt aufweist. Dies können quadratische, oder allgemein rechteckige Querschnitte sein.

Eine vorteilhafte Ausführungsform der Erfindung sieht vor, dass der Kühlkanal einen runden Querschnitt aufweist. Dies können kreisrunde oder elliptische oder sonstige runde Querschnitte sein.

Eine vorteilhafte Ausführungsform der Erfindung sieht vor, dass die radiale Erstreckung des Querschnitts des Kühlkanals in Umfangsrichtung abnimmt. Dabei kann die axiale Erstreckung des Querschnitts konstant bleiben.

Eine vorteilhafte Ausführungsform der Erfindung sieht vor, dass die axiale Erstreckung des Querschnitts des Kühlkanals in Umfangsrichtung abnimmt. Dabei kann die radiale erstreckung des Querschnitts konstant bleiben.

Eine vorteilhafte Ausführungsform der Erfindung sieht vor, dass mehrere Kühlkanäle hintereinander angeordnet sind. Hierdurch lassen sich beispielsweise die Rotorspalte mehrerer axial hintereinander angeordneter Turbinenstufen regeln.

Eine vorteilhafte Ausführungsform der Erfindung sieht vor, dass ein Kühlkanal jeweils nur einen Teilumfang des Gehäuses umfaßt. Dadurch kann beispielsweise der Kühlkanal in zwei Teilkanäle aufgeteilt werden, die jeweils einen halben Gehäuseumfang umfassen.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig. 1: einen schematischen Schnitt durch einen Teil einer erfindungsgemäßen Vorrichtung zur aktiven Spaltkontrolle;
- Fig. 2 a-c: schematische Querschnitte entlang der Linien A -A, B -B, und C - C aus Figur 1; und
- Fig. 3 a-c: schematische Querschnitte einer alternativen Ausführungsform.

Die nachfolgenden Figuren sind schematische Darstellungen und dienen der Erläuterung der Erfindung. Gleiche und ähnliche Bauteile werden durch gleiche Bezugszeichen dargestellt. Die Richtungsangaben beziehen sich auf die Strömungsmaschine, sofern nicht etwas anderes angegeben ist.

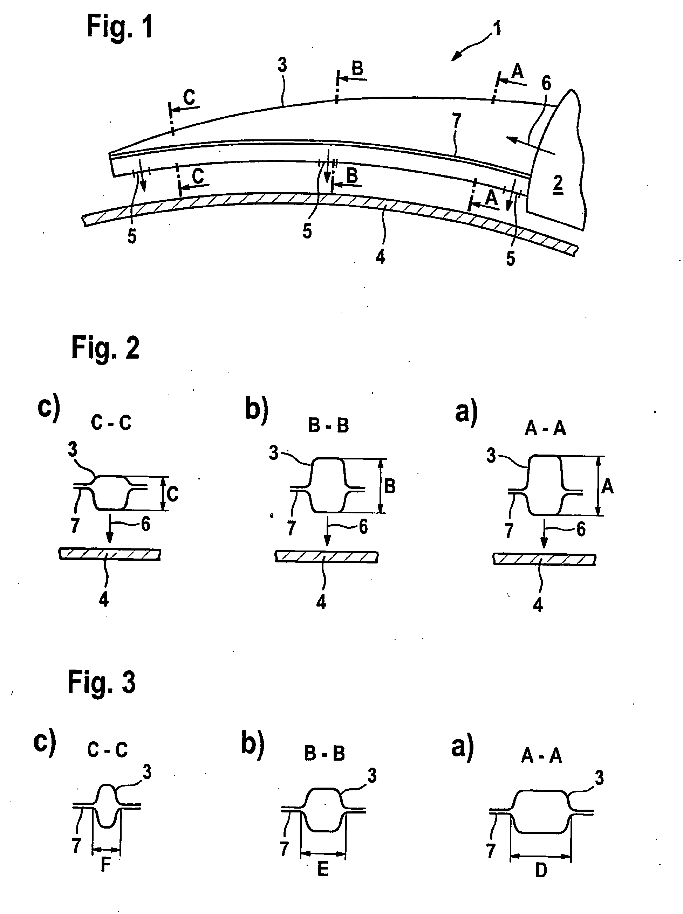

Figur 1 zeigt einen schematischen Schnitt durch einen Teil einer erfindungsgemäßen Vorrichtung zur aktiven Spaltkontrolle 1. Dabei ist ausschnittsweise ein Kühlkanal 3 mit über dem Umfang abnehmendem Querschnitt dargestellt. Die entsprechenden Querschnitte entlang den Linien A - A, B - B und C - C sind dabei in den Figuren 2 a - c schematisch dargestellt.

Wie aus den Figuren 2 a - c erkennbar, ist der Querschnitt des Kühlkanals 3 im wesentlichen rechteckförmig ausgeführt. Dabei nimmt die Höhe, d.h. die radiale Erstreckung des Querschnitts in Umfangsrichtung ab, d.h. In Figur 2a ist die radiale Erstreckung des Querschnitts "A" größer als die radiale Erstreckung des Querschnitts "B" in Figur 2b und diese wiederum ist größer als die radiale Erstreckung des Querschnitts "C" in Figur 2c. Die axiale Erstreckung des Querschnitts bleibt dabei im wesentlichen gleich.

Der Kühlkanal ist im vorliegenden Ausführungsbeispiel aus zwei plastisch verformten Metallhälften hergestellt, die an einem Steg 7 kraftschlüssig, besipielsweise mittels Schweißen, verbunden sind. Der Kühlkanal 3 ist am Gehäuse 4 befestigt und umfaßt im vorliegenden Ausführungsbeispiel das Rotorgehäuse 4 vollständig und kühlt dieses über Austrittsöffnungen 5.

Im Betrieb wird der Kühlkanal 2 mit Abluft aus dem Verdichter versorgt, die über das Plenum 2 in den Kühlkanal 2 einströmt, wie durch Pfeil 6 angedeutet ist. Hierdurch wird der thermischen Ausdehnung des Gehäuses 4 entgegengewirkt und somit der zwischen dem Rotorgehäuse und den Rotorschaufelspitzen auftretede Rotorspalt verringert.

Figur 3 a - c zeigen schematische Querschnitte einer alternativen Ausführungsform. Dabei nimmt die Breite, d.h. die axiale Erstreckung des Querschnitts in Umfangsrichtung ab, d.h. In Figur 3a ist die axiale Erstreckung des Querschnitts "D" größer als die axiale Erstreckung des Querschnitts "E" in Figur 3b und diese wiederum ist größer als die axiale Erstreckung des Querschnitts "F" in Figur 3c. Die radiale Erstreckung des Querschnitts bleibt dabei im wesentlichen gleich. Die Funktionsweise dieser Ausführungsform entspricht der oben beschriebenen.

Durch den über den Umfang abnehmenden Kühlkanalquerschnitt wird die Kühlluftströmung vereinheitlicht und die Rotorspaltkontrolle dadurch verbessert. Außerdem nimmt durch die Materialabnahme auch das Gewicht des Bauteils ab.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Vorrichtung zur aktiven Spaltkontrolle (1) für eine Strömungsmaschine, insbesondere einen Flugantrieb, welche einen Rotor und ein den Rotor unter Ausbildung eines Rotorspaltes umgebendes
Gehäuse (4) aufweist, wobei die Vorrichtung (1) einen am Außenumfang des Gehäuses (4) angeordneten, sich in einem Abstand von der Außenseite des Gehäuses (4) in Umfangsrichtung erstreckenden Kühlkanal (3) aufweist, der von einem Plenum (2) mit Kühlluft versorgt wird und mehrere Austrittsöffnungen (5) für das Ausblasen der Kühlluft auf die Außenseite des Gehäuses (4) besitzt,
dadurch gekenntzeichnet, dass
der Querschnitt des Kühlkanals (3) vom Plenum (2) her in Umfangsrichtung abnimmt.

2. Vorrichtung zur aktiven Spaltkontrolle (1) für eine Strömungsmaschine nach Anspruch 1, **dadurch gekennzeichnet, dass** der Kühlkanal (3) einen rechteckigen Querschnitt aufweist.

3. Vorrichtung zur aktiven Spaltkontrolle (1) für eine Strömungsmaschine nach Anspruch 1, **dadurch gekennzeichnet, dass** der Kühlkanal (3) einen runden Querschnitt aufweist.

4. Vorrichtungen zur aktiven Spaltkontrolle (1) für eine Strömungsmaschine nach Anspruch 1, **dadurch gekennzeichnet, dass** die radiale Erstreckung des Querschnitts des Kühlkanals (3) in Umfangsrichtung abnimmt.

5. Vorrichtung zur aktiven Spaltkontrolle (1) für eine Strömungsmaschine nach einem der oben genannten Ansprüche, **dadurch gekennzeichnet, dass** die axiale Erstreckung des Querschnitts des Kühlkanals (3) in Umfangsrichtung abnimmt.

6. Vorrichtung zur aktiven Spaltkontrolle (1) für eine Strömungsmaschine nach einem der oben genannten Ansprüche, **dadurch gekennzeichnet, dass** mehrere Kühlkanäle hintereinander angeordnet

7. Vorrichtung zur aktiven Spaltkontrolle (1) für eine Strömungsmaschine nach einem der oben genannten Ansprüche, **dadurch gekennzeichnet, dass** ein Kühlkanal jeweils nur einen Teilumfang des Gehäuses umfaßt.

## Claims

1. An apparatus for active gap-control (1) for a continuous flow machine, in particular for an aircraft propulsion device, that has a rotor and a housing (4) surrounding the rotor with the formation of a rotor gap, wherein the apparatus (1) has a cooling channel (3) that is arranged on the outer circumference of the housing (4), extends in the circumferential direction at a distance from the outside of the housing (4), is supplied with cooling air from a plenum (2), and has a plurality of outlet openings (5) for blowing the cooling air out to the outside of the housing (4),
**characterised in that**
the cross-section of the cooling channel (3) decreases from the plenum (2) in the circumferential direction.

2. An apparatus for active gap control (1) for a continuous flow machine according to claim 1, **characterised in that** the cooling channel (3) has a rectangular cross-section.

3. An apparatus for active gap control (1) for a continuous flow machine according to claim 1, **characterised in that** the cooling channel (3) has a round cross-section.

4. Apparatuses for active gap control (1) for a continuous flow machine according to claim 1, **characterised in that** the radial extent of the cross-section of the cooling channel (3) decreases in the circumferential direction.

5. An apparatus for active gap control (1) for a continuous flow machine according to one of the above-mentioned claims, **characterised in that** the axial extent of the cross-section of the cooling channel (3) decreases in the circumferential direction.

6. An apparatus for active gap control (1) for a continuous flow machine according to one of the above-mentioned claims, **characterised in that** a plurality of cooling channels are arranged one after the other.

7. An apparatus for active gap control (1) for a continuous flow machine according to one of the above-mentioned claims, **characterised in that** in each case a cooling channel covers only a part of the circumference of the housing.

## Revendications

1. Dispositif de contrôle actif des jeux (1) pour une turbomachine, en particulier un propulseur aérien, qui comprend un rotor et une enveloppe (4) entourant le rotor en formant un jeu de rotor, dans lequel le dispositif (1) présente un canal de refroidissement (3) disposé à la périphérie extérieure de l'enveloppe (4) et s'étendant en direction périphérique à une distance de la face extérieure de l'enveloppe (4), qui est alimenté en air de refroidissement à partir d'un plénum (2) et possède plusieurs orifices de sortie (5) destinés à souffler l'air de refroidissement sur la face extérieure de l'enveloppe (4), **caractérisé en ce que** la section transversale du canal de refroidissement (3) diminue en direction périphérique à partir du plénum (2).

2. Dispositif de contrôle actif des jeux (1) pour une turbomachine selon la revendication 1, **caractérisé en ce que** le canal de refroidissement (3) présente une section transversale rectangulaire.

3. Dispositif de contrôle actif des jeux (1) pour une turbomachine selon la revendication 1, **caractérisé en ce que** le canal de refroidissement (3) présente une section transversale ronde.

4. Dispositif de contrôle actif des jeux (1) pour une turbomachine selon la revendication 1, **caractérisé en ce que** l'extension radiale de la section transversale du canal de refroidissement (3) diminue en direction périphérique.

5. Dispositif de contrôle actif des jeux (1) pour une turbomachine selon l'une quelconque des revendications précédentes, **caractérisé en ce que** l'extension axiale de la section transversale du canal de refroidissement (3) diminue en direction périphérique.

6. Dispositif de contrôle actif des jeux (1) pour une turbomachine selon l'une quelconque des revendications précédentes, **caractérisé en ce que** plusieurs canaux de refroidissement sont disposés l'un derrière l'autre.

7. Dispositif de contrôle actif des jeux (1) pour une turbomachine selon l'une quelconque des revendications précédentes, **caractérisé en ce qu'**un canal de refroidissement n'embrasse respectivement qu'une partie de la périphérie de l'enveloppe.
